# EUROPÄISCHE PATENTSCHRIFT

(11) **EP 0 423 519 B1**
(45) Veröffentlichungstag und Bekanntmachung des Hinweises auf die Patenterteilung: **30.11.1994**
(21) Anmeldenummer: 90118570.2
(22) Anmeldetag: 27.09.1990
(51) Int. Cl.: D01H 9/00, D01H 9/18, B65H 67/06, B65H 67/04, B65G 25/12

(54) **Transportbahn zum Weiterleiten von Spinnkannen und Verwendung der Transportbahn**
Transporting device for conveying spining cans and use of the transporting device
Transporteur pour le transfert de pots de filature et utilisation du transporteur

(30) Priorität: 19.10.1989 DE 3934816
(43) Veröffentlichungstag der Anmeldung: 24.04.1991
(73) Patentinhaber: GEBALD, Gregor, D-41238 Mönchengladbach (DE); LANGEN, Manfred, D-41066 Mönchengladbach (DE)
(72) Erfinder: Gebald, Gregor, D-41238 Mönchengladbach (DE); Langen, Manfred, D-41066 Mönchengladbach (DE); Bungter, Helmut, D-4060 Viersen 1 (DE)
(74) Vertreter: von Creytz, Dietrich, Dipl.-Phys.

(56) Entgegenhaltungen:
- DE-A- 2 821 325
- DE-A- 3 133 438
- PATENT ABSTRACTS OF JAPAN vol. 9, no. 183 (M-400)(1906) 30. Juli 1985 & JP-A-60 54 409 (NISSAN JIDOSHA K.K. ) 1. September 1983

## Beschreibung

Die Erfindung betrifft eine Transportbahn zum schrittweise gleitenden Weiterleiten von Kannen in der Spinnereivorbereitung bzw. Spinnerei mit einer in Transportrichtung hin- und herbewegbaren, geraden Vorschubstange und daran angebrachten Mitnehmern zum Erfassen der jeweiligen Kanne beim Vorschub, wobei die Mitnehmer in einer einzigen, radial in Bezug auf die Längsachse der Vorschubstange verlaufenden Ebene im gegenseitigen Abstand von höchstens der Kannenteilung unbeweglich fest an der Vorschubstange befestigt sind und wobei die Vorschubstange zum Aufrichten sowie zum Zurseitelegen der Mitnehmer um etwa 90° um ihre Längsachse hin- und herschwenkbar sowie mindestens um einen Mitnehmerabstand in der Transportrichtung hin- und herverschiebbar gelagert ist.

In der Textilindustrie werden Faserbänder von und zu Strecken sowie Flyern oder Spinnmaschinen mit Hilfe sogenannter Spinnkannen, kurz Kannen, transportiert. Nach dem Füllen oder Leerlaufen muß jede Kanne durch eine neue, leere bzw. gefüllte Kanne ersetzt werden. Gegebenenfalls können die kannen mit Hilfe von Rollenbahnen, Hängeförderern oder Förderbändern weitertransportiert werden.

Eine Kannenwechsel- und -transportvorrichtung für Spinnereivorbereitungsmaschinen, bei der die Transportbahnen aus Förderbändern bestehen, wird in der DE-B-12 65 014 beschrieben. Eine entsprechende Vorrichtung, bei der die Förderstrecken als Rollenbahnen ausgeführt sind, wird in der DE-A-38 09 282 angegeben. Gemäß DE-C-19 64 857 ist es auch möglich, die Kannen mit Hilfe von Transportketten auf Gleitbahnen zwischen Führungsschienen zu transportieren.

In allen vorgenannten bekannten Transportbahnen werden rotierende oder doch kontinuierlich in einer Richtung weiterbewegte Bauteile verwendet, die durch den in Textilfabriken üblichen, starken Faserflug schnell so stark verschmutzen, daß eine aufwendige Reinigung erforderlich wird. Bei drehenden Teilen ist die Reinigung wegen der entstehenden Faserwickel besonders schwierig. Weiterhin ist es bekannt nachteilig, daß die Rollenbahnen, Transportbänder oder Transportketten entweder im Boden versenkt werden müssen oder als Stufe von ca 200 bis 300 mm Höhe in Erscheinung treten. Entweder müssen also in der jeweiligen Fabrikhalle Gräben vorgesehen werden, oder es muß eine erhebliche Unfallgefahr durch Stolpern bzw. eine Sperre gegenüber rollendem Querverkehr in Kauf genommen werden.

Eine gattungsgemäße Transportbahn kann der JP-A-60 52 409 entnommen werden. Dieses Dokument offenbart eine Transportbahn, die geeignet ist zum schrittweise gleitenden Weiterleiten von Kannen in der Spinnereivorbereitung bzw. Spinnerei, mit einer in Transportrichtung hin- und herbewegbaren Vorschubstange und daran angebrachten Mitnehmern zum Erfassen der jeweiligen Kanne beim Vorschub, wobei die Mitnehmer in einer einzigen, radial in Bezug auf die Längsachse der Vorschubstange verlaufenden Ebene im gegenseitigen Abstand von höchstens der Kannenteilung unbeweglich fest an der Vorschubstange befestigt sind und daß die Vorschubstange zum Aufrichten sowie zum Zurseitelegen der Mitnehmer um etwa 90° um ihre Längsachse hin- und herschwenkbar sowie mindestens um einen Mitnehmerabstand in der Transportrichtung hin- und herverschiebbar gelagert ist.

Eine weitere Transportbahn kann der DE-A-31 33 438 entnommen werden. Im Bekannten werden an der Vorschubstange schwenkbar gelagerte Mitnehmer vorgesehen, die durch eine Federkraft gegen jeweils einen mit der Stange verbundenen Anschlag von der Stange weggespreizt werden. Beim Hin- und Herfahren der Stange in deren Längsrichtung greifen die Mitnehmer entweder hinter eine Kanne und schieben sie in Stangenlängsrichtung weiter, oder sie gleiten beim Zurückfahren gegen die Federkraft an der jeweiligen Kanne entlang. Ein Nachteil der bekannten Einrichtung besteht darin, daß die Kannen nur paarweise vorzuschieben sind, wobei die Vorschubstange zwischen zwei Kannenreihen angeordnet wird, und daß die Kannenreihen auf der von der Stange abgewendeten Außenseite zusätzlicher Gleitführungen bedürfen. Die bekannte Einrichtung wird durch den Angriffspunkt der Mitnehmer und durch das Gleiten sowohl am Boden als auch an seitlichen Führungen so schwergängig, daß die Kannen - bei entsprechend starkem Antrieb der Vorschubstange - durch das seitliche Angreifen der Mitnehmer schnell verbeult werden. In der Praxis muß daher das bekannte Mitnehmersystem mit Rollenbahnen kombiniert werden.

Der Erfindung liegt die Aufgabe zugrunde, eine Kannentransportbahn mit Taktvorschub für jeweils eine einzige Kannenreihe zu schaffen, bei der seitliche Führungen der Kannen nicht erforderlich sind und welche den Unfallschutzbestimmungen genügt sowie eine so geringe Bauhöhe besitzt, daß sie wie eine Türschwelle in Kauf zu nehmen ist.

Die erfindungsgemäße Lösung besteht für die eingangs genannte Transportbahn mit einer in Transportrichtung hin- und herbewegbaren Vorschubstange und daran angebrachten Mitnehmern darin, daß die Vorschubstange in der Mitte zwischen zwei gegebenenfalls eine einzige Kannenreihe tragenden Gleitschienen gelagert ist, daß sie für die Schwenkbewegung in Lagerklötzen aufgenommen ist und daß die Lagerklötze für die Längsbewegung in einer Schiene gelagert sind.

Der Erfindung liegt die Erkenntnis zugrunde, daß der die Schubstange mit Mitnehmern aufweisende Kannentransporteur meist nur in relativ großen zeitlichen Abständen von z.B. ¼ bis ½ Stunde erfolgen muß. Die Kannen stehen daher meist still und können gegebenenfalls relativ langsam vorwärtsbewegt werden. Ein derartiger Transport kann mit Hilfe der erfindungsgemäßen Vorschubstange leicht und mit großer Präzision betreffend das Positionieren der einzelnen Kanne bewirkt werden. Ein schnelles Vorwärtsbewegen der Kanne liegt ebenfalls ohne Nachteile für die Positioniergenauigkeit im Rahmen der Erfindung.

Durch die Erfindung wird erreicht, daß Faserwickel an den bewegten Teilen der Transportbahn nicht gebildet werden können, weil die bewegten Teile, nämlich die Vorschubstange, lediglich Hin- und Herbewegungen in Längsrichtung oder in Umfangsrichtung ausführt. Etwa anhaftende Fasern werden durch die Hin- und Herbewegung sogar selbsttätig abgestoßen. Wenn sich trotzdem Fasern ansammeln sollten, läßt sich die Transportbahn, z.B. mit Hilfe von Druckluft, leicht reinigen, weil nur die gerade Stange und deren Lager sauber zu halten sind und keine Faserwickel entstehen können.

Ferner wird durch die Erfindung eine außerordentlich geringe Bauhöhe der Transportbahn erreicht, weil über dem Boden lediglich eine - z.B. als Stahlrohr auszubildende - Stange von beispielsweise 20 mm Durchmesser, längsverschiebbar und um die Längsachse schwenkbar zu lagern ist. Die Bauhöhe läßt sich in einem solchen Fall auf 25 bis 35 mm beschränken. Eine Schwelle dieser Höhe auf dem Fabrikboden wird vom Personal als beim Gehen nicht nennenswert störend empfunden. Die Schwelle kann sogar von den in einem Fabrikbetrieb benutzten Fahrzeugen überwunden werden.

Ein weiterer Vorteil der Erfindung besteht darin, daß als Transporteur lediglich eine linear hin- und herbewegte und um ihre Achse hin- und hergeschwenkte Stange mit den zugehörigen Antrieben erforderlich ist. Gegenüber Kettentrieben, Transportbändern oder gar Rollenbahnen sind also verhältnismäßig geringe Investitions- und Montagekosten aufzubringen.

Erfindungsgemäß werden die Mitnehmer für einen Kannenvorschub aufgerichtet und greifen dann von unten in den üblichen hohlen Bodenraum der Kanne, so daß beim Vorwärtsbewegen der Vorschubstange einer von deren Mitnehmern am inneren unteren - im wesentlichen eine zylindrische Fortsetzung der Kannenwand bildenden - Rand der Kanne angreift. Zumindest dann, also beim Kannenvorschub, liegt die Stange auf einer Linie, die durch die Kannenlängsachse (Mittellinie) geht. Durch diese gegenseitige Zuordnung wird bewirkt, daß die Reibungskraft zwischen Kanne und Boden bzw. Führung durch das Angreifen des Mitnehmers nicht vergrößert, sondern eher verkleinert wird. Eine Vorschuberleichterung durch Rollenbahnen oder dergleichen ist daher entbehrlich, vielmehr reichen einfache Gleitschienen als Transportbahn der Kannen aus.

Erfindungsgemäß wird als Transporteur der auf Gleitschienen rutschenden Kannen die über eine vorgegebene Transportstrecke reichende Vorschubstange vorgesehen. Letztere ist in ihrer Längsrichtung um einen gewissen Betrag, den Stangenhub, z.B. größenordnungsmäßig 150 mm, vor- und zurückschiebar und um etwa 90° in Umfangsrichtung hin- und herschwenkbar gelagert. In einem gegenseitigen Abstand kleiner als der Hub der Stange werden an dieser eine Reihe von in einer einzigen Ebene im wesentlichen radial abstehenden Mitnehmern fest angebracht. Der auch als Stangenteilung zu bezeichnende gegenseitige Abstand benachbarter Mitnehmer soll höchstens so groß sein, daß ein aufgerichteter, einen unteren Kannenrand von der Kannenseite her erfassender Mitnehmer nach einem Vorschub und einer darauffolgenden Zurückbewegung der Stange (in abgeschwenkter Position) für einen weiteren Vorschub unter der nächstfolgenden Kanne aufzurichten ist und bei dem neuen Vorschub den anderen Kannenrand von der Innenseite her erfassen kann. Im allgemeinen bedeutet das, daß der Stangenhub um mindestens etwa zwei Stärken des zu erfassenden Kannenrandes größer als Stangenteilung sein soll.

Bei Betrieb werden die Kannen mit Hilfe der Vorschubstange durch deren Längs- und Schwenkbewegung schrittweise vorwärts oder zurück bewegt. Dabei wird die Vorschubstange bei einem ersten Schritt zunächst so geschwenkt, daß die Mitnehmer nach oben stehen und unter die darüber angeordneten Kannen greifen. Dann wird die Stange in einem zweiten Schritt in der jeweiligen Vorwärtsrichtung um einen Betrag bis zum maximalen Hub, z.B. um die genannten 150 mm, vorwärtsbewegt. In einem dritten Schritt wird die Stange um 90° (um ihre Längsrichtung) zurückgeschwenkt, so daß die Mitnehmer ohne Berührung der Kannen unter diesen hinweggleiten können. Die Stange wird dann in einem vierten Schritt mit abgesenkten Mitnehmern um den vorherigen Hub zurückbewegt und wiederum um 90° geschwenkt, so daß die Mitnehmer wieder aufrechtstehen und die Kannen beim Vorwärtsbewegen der Stange um einen nächsten Takt weiterzuschieben bzw. weiterzuziehen sind.

In der Praxis sollen die Kannen bei dem Vorwärtstransport auf zwei schienenartigen Leisten gleiten, die mit einem für einen stabilen Stand ausreichenden Abstand beiderseits der Vorschubstange angeordnet werden. Die Gleitschienen sollen vorzugsweise aus einem Kunststoff bestehen, auf dem das Material der Kannen besonders gut gleitet. Wenn die Gleitschienen beiderseits der Stange nicht unmittelbar an die die Stange eventuell aufnehmenden Gehäuseteile angrenzen, kann der Zwischenbereich ausgefüllt werden, um eine ausreichend trittsichere Oberfläche der Transportbahn zu erhalten. Zum Ausfüllen können beispielsweise Holzplatten verwendet werden.

Da die erfindungsgemäße Vorschubstange lediglich in Gleitführungen zu lagern ist, die eine Hin- und Herbewegung und eine Schwenkung um 90° zulassen, läßt sich eine Bauhöhe von 25 bis 35 mm ohne weiteres einhalten. Die Montage kann selbst bei leicht welligen, unebenen Böden ohne Schwierigkeiten ausgeführt werden.

Als Antrieb der Vorschubstange wird vorzugsweise ein Kurbelantrieb vorgesehen, der einen Sinus-förmigen Vorschub bewirkt. Dadurch wird erreicht, daß die Bewegung der Stange im Totpunkt des Kurbelantriebs langsam beginnt und langsam aufhört. Beim Anfahren ergeben sich also keine Schläge gegen die Kannen. Beim Abbremsen ist ein Nachfahren der Kannen nicht zu befürchten. Die Kannen sind also exakt zu positionieren.

Die Zahl der Mitnehmer der Schubstange ist an sich beliebig. Der Mitnehmerabstand darf jedoch höchstens gleich der Kannenteilung sein, wenn beim Kannentransport jede einzelne Kanne von einem Mitnehmer erfaßt werden soll. Gemäß weiterer Erfindung kann die Mitnehmerteilung aber auch mehr oder weniger kleiner als die Kannenteilung gemacht werden. Vorteilhaft ist es, wenn die Kannenteilung gleich einem ganzzahligen Vielfachen der Mitnehmerteilung (Mitnehmerabstand) gewählt wird.

Erfindungsgemäß wird die Vorschubstange für die Schwenkbewegung in Lagerklötzen aufgenommen, während die Lagerklötze für die Längsbewegung in einer Schiene verschiebbar gelagert werden. Die Lagerklötze können im Prinzip zugleich auch relativ zur Stange, z.B. durch Zufallskräfte, längsverschiebbar sein. Bevorzugt wird aber vorgesehen, die Position der Lagerklötze relativ zur Stangenlänge fest vorzugeben, so daß eine strikte Trennung der Längs- und Schwenklagerung der Stange vorliegt.

Wenn jeder Lagerklotz eine feste Position auf der Länge der Stange haben darf, kann es günstig sein, die Mitnehmer innerhalb je eines Lagerklotzes an der Stange zu befestigen. Im jeweiligen Lagerklotz wird dann ein radial in Bezug auf die Stange verlaufender Schlitz vorgesehen, der eine etwa 90°-Schwenkung des Mitnehmers erlaubt. Um hierzu zusätzlich die Unfallgefahr, die durch eine Scherwirkung zwischen den Mitnehmern einerseits und den die Mitnehmer beiderseits begrenzenden Schlitzwänden andererseits bedingt werden kann, auszuschließen, ist es gemäß weiterer Erfindung noch günstiger, wenn die den Schlitz aufweisende Seite des Lagerklotzes so abgeschrägt wird, daß der Scherwinkel zwischen Mitnehmer und Lagerklotzschrägung größer als 90° ist. Ein dann zufällig in diesen Bereich kommender Finger oder dergleichen wird nicht abgeschert, sondern zur Seite geschoben. Wegen der so verminderten Schergefahr ist die Anordnung des Mitnehmers innerhalb des - wie beschrieben - abgeschrägten Lagerklotzes besonders günstig, denn bei Anordnung des Mitnehmers an irgendeiner Stelle außerhalb der Lagerklötze und bei Beweglichkeit der Lagerklötze in Stangenlängsrichtung kann immer eine Relativposition von Lagerklotz und Mitnehmer auftreten, bei der eine erhöhte Schergefahr an der Grenze zwischen Mitnehmer und Lagerklotz besteht.

Bei der erfindungsgemäßen Transportbahn ist es schließlich möglich, oberhalb der Vorschubstange im Bereich unmittelbar unterhalb der Gleitebene der zu transportierenden Kannen eine Abdeckung mit einem Schlitz für die Mitnehmer und deren Schwenkbewegung vorzusehen.

Auf der erfindungsgemäßen Transportvorrichtung können nicht nur Spinnkannen, sondern auch andere am Boden erfaßbare Gegenstände, wie Dosen, Teller, Boxen, Peg-Trays bzw. Bobbin-Trays (=Aufsteckfutter für Spulen und Kopse) und dergleichen, gefördert werden. Die Erfindung findet daher bevorzugt Anwendung bei Spinnkannen, kann aber erhebliche Vorteile auch im Zusammenhang mit anderen Gegenständen bringen.

Anhand der schematischen Darstellung von Ausführungsbeispielen werden Einzelheiten der Erfindung erläutert. Es zeigen:
- Fig. 1: eine Draufsicht auf eine Transportbahn; und
- Fig. 2: eine Ausschnittzeichnung einer Vorschubstange mit der Lagerung für die Längs- und Schwenkbewegung.

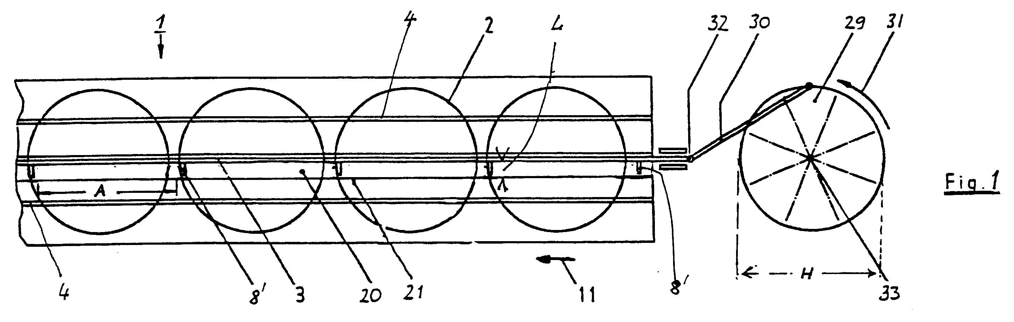

In Fig. 1 wird schematisch eine insgesamt mit 1 bezeichnete Transportbahn zum gleitenden Weiterleiten von Kannen 2 dargestellt. Als Kannentransporteur dient eine gerade Vorschubstange 3, die zwischen zwei den Kannen 2 zugeordneten Gleitschienen 4 am Boden gelagert wird. Aus der Vorschubstange 3 springen in einer etwa radial in Bezug auf die Stangenlängsachse 6 verlaufenden Ebene Mitnehmer 8 vor. Die Vorschubstange 3 wird zum Aufrichten und Zurseitelegen der Mitnehmer 8 um etwa 90° um ihre Achse 6 in Umfangsrichtung hin- und herschwenkbar sowie um mindestens den Stangenhub H in Richtung ihrer Längsachse 6 hin- und herverschiebbar gelagert.

Die Vorschubstange 3 kann aus Stahlrohr, beispielsweise 20 mm Durchmesser, bestehen. Jeder Mitnehmer 8 kann ebenfalls aus Stahl mit einem Durchmesser von beispielsweise 8 mm hergestellt und unbeweglich fest, z.B. durch Schweißen, mit der Stange 3 verbunden werden. Die Länge L der Mitnehmer 8 wird so gewählt, daß der vertikal aufgerichtete Mitnehmer 8 unter den Boden einer auf der Anordnung nach Fig. 1 stehenden Kanne vorspringt und bei Bewegung in der Transportrichtung 11 die Kanne 2 durch Angriff an der Innenwand von deren unteren Rand mitnimmt.

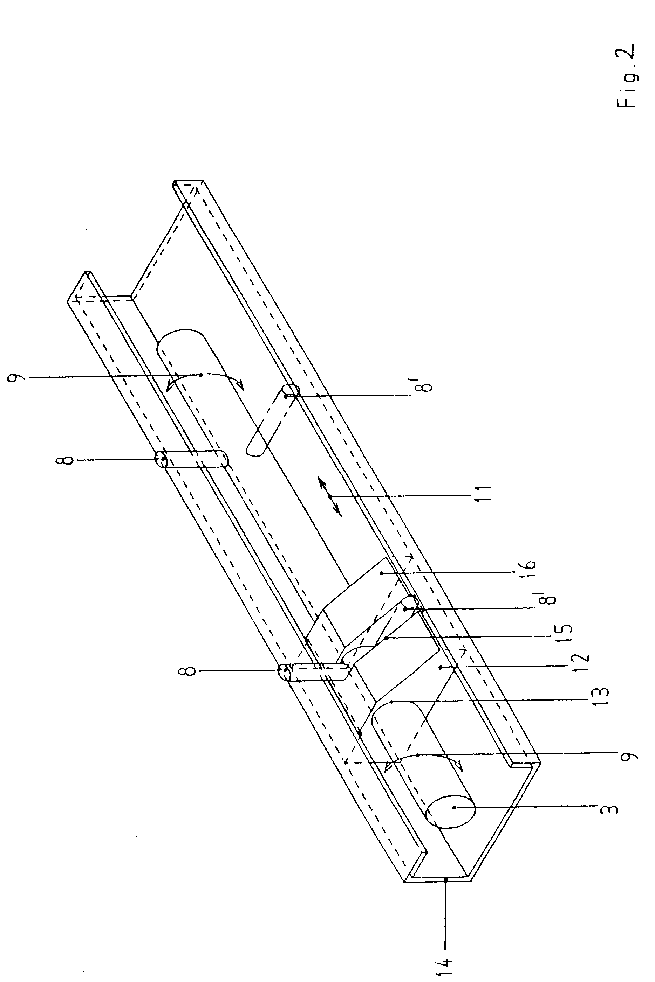

Erfindungsgemäß wird die Vorschubstange 3 nach Fig. 2 für die Schwenkbewegung in Umfangsrichtung 9 um den Winkel a in einer Bohrung 13 eines Lagerklotzes 12 gelagert; für die Längsbewegung der Vorschubstange 3 wird eine den Lagerklotz 12 aufnehmende Schiene 14 vorgesehen, die vorzugsweise aus einem - wie gezeichnet - L- bzw. G-förmig gefalteten Blech bestehen kann. Hierdurch wird eine Trennung der Stangenlagerung für die Schwenkbewegung einerseits und der Stangenlagerung für die Längsbewegung andererseits erreicht. Die Mitnehmer 8 können unabhängig vom jeweiligen Lagerklotz 12 irgendwo an der Stange befestigt werden; auf der rechten Seite von Fig. 2 wird ein solcher Fall als Beispiel dargestellt. Die Verbindung zwischen Stange 3 und Mitnehmer 8 kann aber auch in einen Lagerklotz 12 integriert werden. Zumindest in diesem Fall liegt eine strikte Trennung der Lagerung der Stange für die Längs- und Schwenkbewegung vor.

Nach Fig. 2 wird der Mitnehmer 8 innerhalb des Lagerklotzes 12 an der Stange 3 befestigt. Um die 90°-Schwenkung des Mitnehmers 8 zu gewährleisten, besitzt der Lagerklotz 12 einen radial in Bezug auf die Stange 3 verlaufenden Schlitz 15, der in Umfangsrichtung und in radialer Richtung mit Bezug auf die Stange 3 gerade so groß ist, daß ein im wesentlichen reibungsloses Schwenken des Mitnehmers 8 in Umfangsrichtung 9 (hin und her) erfolgen kann. In diesem Zusammenhang hat es sich als besonders günstig erwiesen, wenn die den Schlitz 15 aufweisende Oberseite 16 des Lagerklotzes 12 so abgeschrägt wird, daß der Scherwinkel zwischen Mitnehmer 8 und der Schrägung der Oberseite 16 überall größer als 90° ist.

Bei Betrieb stehen die erfindungsgemäß weiterzubewegenden Kannen 2 im allgemeinen dicht an dicht oder mit vorgegebenem gegenseitigem Abstand auf der Transportbahn 1. Sie gleiten auf den Gleitschienen 4 und werden durch die Taktbewegung der Vorschubstange 3 in der jeweiligen Transportrichtung 11 weiterbewegt. Durch die Oberkante der Gleitschienen 4 wird eine Gleitebene definiert, über die die aufgerichteten Mitnehmer 8 nach oben vorspringen. Die Mitnehmer 8 werden für einen Angriff an den Kannen 2 aufgerichtet, aber bei der gegenläufigen (Zurück-Bewegung) durch Schwenken um die Längsachse 6 in die gestrichelt dargestellte Seitenlage 8' (vgl. Fig. 2) unter die Gleitebene abgesenkt. In einem das Vorschieben der Kannen 2 gerade nicht behindernden Abstand unterhalb der Gleitebene kann eine Abdeckung angeordnet werden. Um eine Längsbewegung der Stange 3 mit aufgerichteten Mitnehmern 8 zu ermöglichen, wird in der Abdeckung ein Längsschlitz vorgesehen, der im wesentlichen auf der ganzen Länge der Stange 3 vorhanden und so breit sein soll, daß die Mitnehmer 8 ohne Unfallgefahr, also mit Abstand von der dem Mitnehmer 8 gegenüberliegenden Kante des Längsschlitzes vorbeischwenken können.

Zum Lagern der Vorschubstange 3 wird im Ausführungsbeispiel nach Fig. 1 ein insgesamt mit 22 bezeichnetes Gehäuse vorgesehen, dessen Oberseite etwas unterhalb der Gleitebene 17 liegt. Wenn das Gehäuse 22 horizontal nicht an die Gleitschiene heranreicht, kann der Zwischenraum mit Hilfe einer Platte, z.B. aus Holz, ausgefüllt werden. Auch der unterhalb der jeweiligen Kanne 2 liegende restliche Teil der Transportbahn 1 außerhalb der Gleitschienen 4 (mit Bezug auf die Stange 3) kann mit Hilfe einer Platte 24 auf das Niveau des Gehäuses 22 erhöht werden, derart, daß die Transportbahn 1 insgesamt im wesentlichen praktisch eben ist.

Die Gleitschiene 4 nach Fig. 1 wird im Ausführungsbeispiel aus einem Kunststoff hergestellt, auf dem das Material der Kannen 2 besonders gut gleitet. Als Antrieb der Vorschubstange 3 wird vorzugsweise eine Schubkurbel 29 vorgesehen, deren Kurbelstange 30 bei Drehung in Pfeilrichtung 31 über einen Kreuzkopf 32 an der Vorschubstange 3 angreift. Wenn man den Anfang und das Ende der jeweiligen Vorschubbewegung an die Stelle legt, an der die Kurbelstange 30 in der Ebene der Achse 33 der Schubkurbel 29 liegt, beginnt die Bewegung der Vorschubstange 3 in einem Totpunkt und endet in einem Totpunkt des Kurbeltriebs. Ein Antrieb der Stange 3 mit Hilfe eines Zylinders , einer Spindel oder dergleichen ist ebenfalls möglich.

Eine Ausführung, bei der der gegenseitige Abstand der Mitnehmer einem ganzzahligen Teiler der Kannenteilung entspricht, ist insbesondere dann wünschenswert, wenn Kannen von einer Transportbahn auf eine andere, die beispielsweise quer zur ersten läuft, übergeben werden sollen. Dies kann dann geschehen, wenn der Mitnehmer der Vorschubstange der einen Bahn die Kanne bereits in den Zugriffsbereichs des Mitnehmers der Vorschubstange der anderen Bahn schiebt, ohne daß die Vorschubstangen einander kreuzen.

## Patentansprüche

1. Transportbahn (1) zum schrittweise gleitenden Weiterleiten von Kannen (2) in der Spinnereivorbereitung bzw. Spinnerei mit einer in Transportrichtung (11) hin- und herbewegbaren, geraden Vorschubstange (3) und daran angebrachten Mitnehmern (8) zum Erfassen der jeweiligen Kanne (2) beim Vorschub, wobei die Mitnehmer (8) in einer einzigen, radial in Bezug auf die Längsachse (6) der Vorschubstange (3) verlaufenden Ebene im gegenseitigen Abstand (A) von höchstens der Kannenteilung unbeweglich fest an der Vorschubstange befestigt sind und wobei die Vorschubstange (3) zum Aufrichten sowie zum Zurseitelegen der Mitnehmer (8) um etwa 90° um ihre Längsachse (6) hin- und herschwenkbar sowie mindestens um einen Mitnehmerabstand (A) in der Transportrichtung (11) hinund herverschiebbar gelagert ist,
**dadurch gekennzeichnet,**
daß die Vorschubstange (3) in der Mitte zwischen zwei gegebenenfalls eine einzige Kannenreihe tragenden Gleitschienen (4) gelagert ist, daß sie für die Schwenkbewegung in Lagerklötzen (12) aufgenommen ist und daß die Lagerklötze (12) für die Längsbewegung in einer Schiene (14) gelagert sind.

2. Transportbahn nach Anspruch 1,
**dadurch gekennzeichnet,**
daß die Mitnehmer (8) innerhalb je eines Lagerklotzes (12) an der Vorschubstange (3) befestigt sind und daß der jeweilige Lagerklotz (12) einen eine etwa 90°-Schwenkung des Mitnehmers (8) erlaubenden, radial in Bezug auf die Längsachse (6) verlaufenden Schlitz (15) besitzt.

3. Transportbahn nach Anspruch 2,
**dadurch gekennzeichnet,**
daß die den Schlitz (15) aufweisende Oberseite (16) des Lagerklotzes (12) so abgeschrägt ist, daß der Scherwinkel zwischen Mitnehmer (8) und schräger Oberseite (16) größer als 90° ist.

4. Transportbahn nach mindestens einem der Ansprüche 1 bis 3,
**dadurch gekennzeichnet,**
daß der Hub (H) der Vorschubstange mindestens gleich der Summe von Mitnehmerabstand (A) und doppelter Dicke eines zu erfassenden Kannenrandes ist.

5. Transportbahn nach mindestens einem der Ansprüche 1 bis 4,
**dadurch gekennzeichnet,**
daß die Kannenteilung gleich einem ganzzahligen Vielfachen des Mitnehmerabstands (A) ist.

6. Transportbahn nach mindestens einem der Ansprüche 1 bis 5,
**dadurch gekennzeichnet,**
daß oberhalb der Vorschubstange (3) im Bereich unmittelbar unterhalb einer den zu transportierenden Kannen (12) zugeordneten Gleitebene eine Abdeckung mit einem Längsschlitz (20) für den Mitnehmervorschub vorgesehen ist, welche eine für das Schwenken des Mitnehmers (8) ausreichende Breite besitzt.

7. Transportbahn nach mindestens einem der Ansprüche 1 bis 6,
**dadurch gekennzeichnet,**
daß der Vorschubstange (3) ein Kurbeltrieb (29) für die Hinund Herbewegung in der Transportrichtung (11) zugeordnet ist.

8. Transportbahn nach mindestens einem der Ansprüche 1 bis 7,
**dadurch gekennzeichnet**
daß je eine Gleitschiene (4) beiderseits der Vorschubstange (3) in einem für den stabilen Stand der Kannen (2) ausreichenden gegenseitigen Abstand vorgesehen ist und daß der Bereich zwischen der Vorschubstange (3) und der Gleitschiene (4), insbesondere mit je einer Holzplatte, ausgefüllt ist.

9. Verwendung der Transportbahn nach mindestens einem der Ansprüche 1 bis 8,
**dadurch gekennzeichnet,**
daß anstelle von Spinnkannen andere am Boden zu erfassende Gegenstände, wie Dosen, Teller, Boxen, Peg- bzw. Bobbin-Trays und dergleichen zu transportieren sind.

## Claims

1. Conveyor belt (1) for the intermittent sliding conveyance of cans (2) in preparation for the spinning machine or in the spinning machine, with a straight advance rod (3) movable to and fro in the conveying direction (11) and drivers (8) arranged thereon for detecting the respective can (2) during the advance, the drivers (8) being fastened non-movably rigidly on the advance rod (3) at mutual intervals (A) of at most the can pitch in a single plane extending radially with respect to the longitudinal axis (6) of the advance rod (3) and the advance rod (3) being mounted so as to pivot to and fro through about 90° round its longitudinal axis (6) in order to position the drivers (8) uprightly or to the side and so as to be displaceable to and fro in the conveying direction (11) at least by a driver interval (A), characterised in that the advance rod (3) is mounted in the centre between two slide rails (4) optionally carrying a single row of cans, in that it is received in bearing blocks (12) for the pivoting movement and in that the bearing blocks (12) for the longitudinal movement are mounted in a rail (14).

2. Conveyor belt according to claim 1, characterised in that the drivers (8) inside each bearing block (12) are fastened on the advance rod (3) and in that the respective bearing block (12) has a slot (15) allowing substantially 90° pivoting of the driver (8) and extending radially with respect to the longitudinal axis (6).

3. Conveyor belt according to claim 2, characterised in that the upper side (16) of the bearing block (12) having the slot (15) is bevelled such that the shearing angle between driver (8) and oblique upper side (16) is greater than 90°.

4. Conveyor belt according to at least one of claims 1 to 3, characterised in that the stroke (H) of the advance rod is at least equal to the sum of driver interval (A) and twice the thickness of a can rim to be detected.

5. Conveyor belt according to at least one of claims 1 to 4, characterised in that the can pitch is equal to an integral multiple of the driver interval (A).

6. Conveyor belt according to at least one of claims 1 to 5, characterised in that above the advance rod (3) in the region directly below a sliding plane allocated to the cans (12) to be conveyed there is provided a covering with a longitudinal slot (20) for the driver advance, the covering having a width which is adequate for pivoting of the driver (8).

7. Conveyor belt according to at least one of claims 1 to 6, characterised in that the advance rod (3) is allocated a crank mechanism (29) for the to and fro movement in the conveying direction (11).

8. Conveyor belt according to at least one of claims 1 to 7, characterised in that a respective sliding rail (4) is provided on both sides of the advance rod (3) at mutual intervals adequate for the stable standing of the cans (2) and in that the region between the advance rod (3) and the sliding rail (4) is filled, in particular, with a respective wooden panel.

9. Use of the conveyor belt according to at least one of claims 1 to 8, characterised in that, instead of spinning cans, other articles to be detected on the floor, such as canisters, plates, boxes, peg and bobbin trays and the like are to be conveyed.

## Revendications

1. Bande transporteuse (1) destinée à entraîner des pots (2) pas-à-pas à coulissement dans la préparation de filature ou dans la filature, incluant une tige rectiligne d'avance (3) mobile en va-et-vient dans la direction de transport (11) et des entraîneurs (8) qui y sont montés de manière à saisir le pot respectif (2) lors de l'avance, les entraîneurs (8) étant fixés de façon ferme et immobile sur la tige d'avance à une distance mutuelle (A) au plus égale à l'écart entre pots dans un plan unique de tracé radial par rapport à l'axe longitudinal (6) de la tige d'avance (3), et la tige d'avance (3) étant logée de façon à pouvoir pivoter d'environ 90° en va-et-vient, afin d'orienter les entraîneurs (8) ainsi que les écarter, et étant mobile à coulissement en va-et-vient d'au moins une distance (A) entre entraîneurs dans la direction de transport (11),
caractérisée en ce que
la tige d'avance (3) est logée au milieu entre deux rails de guidage (4) qui portent éventuellement une rangée unique de pots, d'une manière telle qu'elle est reçue, pour son déplacement pivotant, dans des cales (12) à palier et en ce que les cales (12) à palier sont logées dans un rail (14) pour leur déplacement longitudinal.

2. Bande transporteuse selon la revendication 1,
caractérisée en ce que
chacun des entraîneurs (8) est fixé sur la tige d'avance (3) à l'intérieur d'une cale (12) à palier et en ce que la cale (12) à palier respective comporte une fente (15), de tracé radial par rapport à l'axe longitudinal (6), qui permet un pivotement d'environ 90° de l'entraîneur (8).

3. Bande transporteuse selon la revendication 2,
caractérisée en ce que
le côté supérieur (16) de la cale (12) à palier où est ménagée la fente (15) est incliné d'une manière telle que l'angle de cisaillement entre l'entraîneur (8) et le côté supérieur oblique (16) est supérieur à 90°.

4. Bande transporteuse selon l'une au moins des revendications 1 à 3,
caractérisée en ce que
la course (H) de la tige d'avance est au moins égale à la somme de la distance (A) entre entraîneurs et du double de l'épaisseur d'un bord de pot à saisir.

5. Bande transporteuse selon l'une au moins des revendications 1 à 4,
caractérisée en ce que
l'écart entre pots est égal à un multiple entier de la distance (A) entre les entraîneurs.

6. Bande transporteuse selon l'une au moins des revendications 1 à 5,
caractérisée en ce que
un couvercle où une fente longitudinale (20) est ménagée pour l'avance de l'entraîneur et dont la largeur est suffisante pour le pivotement de l'entraîneur (8), est prévu au-dessus de la tige d'avance (3) dans la zone située immédiatement au-dessous d'un plan de glissement associé aux pots (12) à transporter.

7. Bande transporteuse selon l'une au moins des revendications 1 à 6,
caractérisée en ce que
un dispositif à vilebrequin (29) est associé à la tige d'avance (3) pour le déplacement en va-et-vient dans la direction de transport (11).

8. Bande transporteuse selon l'une au moins des revendications 1 à 7,
caractérisée en ce que
un rail de coulisse(4) est prévu sur chaque côté de la tige d'avance (3), leurs distances mutuelles étant satisfaisantes pour permettre l'état stable des pots (2), et en ce que chacune des zones comprises entre la tige d'avance (3) et un rail de coulisse (4) est garnie, en particulier au moyen d'une plaque de bois.

9. Utilisation de la bande transporteuse selon l'une au moins des revendications 1 à 8,
caractérisée en ce que
d'autres objets à saisir par le fond, par exemple des boîtes, des assiettes, des boîtiers, des plateaux de broches ou de bobines et similaires peuvent être transportés en variante à des pots de filature.
